Europäisches Patentamt

European Patent Office

Office européen des brevets

(11) Publication number: **0 464 806 A1**

# EUROPEAN PATENT APPLICATION

(21) Application number: **91111066.6**

(22) Date of filing: **04.07.91**

(51) Int. Cl.⁵: **H04N 9/28**

(30) Priority: **06.07.90 IT 6750290**

(43) Date of publication of application:
**08.01.92 Bulletin  92/02**

(84) Designated Contracting States:
**DE ES FR GB NL**

(71) Applicant: **Società Italiana per lo Sviluppo dell'Elettronica S.I.SV.EL. S.p.A.**
**Via Castagnole, 59**
**I-10060 None (TO)(IT)**

(72) Inventor: **Del Cont Bernard, Stefano**
**via Valussi 39**
**I-33081 Aviano, Pordenone(IT)**
Inventor: **Rampin, Marco**
**via S.Donà 170/A**
**I-30174 Venezia Mestre, Venezia(IT)**

(54) **Generating device of convergence signals for colour display.**

(57) The present invention has as its object a generating device of convergence signals for colour display, in particular for a video projector, obtained by superimposing different colour images, the characterising principle of the invention consists in the fact that the generator comprises a digital memory for conserving in a matrix form the values of the corrective convergence signals in function of the position, horizontal and vertical, of the luminous point on the screen.

FIGURA

The present invention relates to a generating device of convergence signals for colour display, in particular for a projector of video images, obtained by superimposing images of different colours.

It is known that with video projectors, as with normal colour televisions, the coloures image is obtained by the superimposing of three images of a different colour, precisely a red image, a green one and a blue one.

It is also known that, being three images simultaneously generated, they come from three different spacial centres, and therefore so as to be able to superimposed them exactly, corrections are needed, called convergence.

Generally, being the deflection obtained by means of stray currents made to flow in a yoke of deflection coils, the corrections of convergence are represented by currents having adequate form and timing.

These currents of convergence are obtained by circuit means, precisely mentioned convergence, of an analogic type starting from the line and frame syncronism signals.

Convergence circuits appear complicated, but above all of difficult adjustment, particularly in the case of apparatus that have to function at different scanning frequencies.

The aim of the present invention is therefore to indicate a generating device of convergence signals for colour display, in particular for a projector of video images, that consents a fine correction in many points of the screen, be it of simple adjustment and independent from the scanning frequencies.

So as to allow such aims the present invention has as its object a generating device of convergence signals for colour display, in particular for a video projector, obtained by superimposing different colour images, characterised by the fact that the generator comprises a digital memory for conserving in a matrix form the values of the corrective convergence signals in function of the position, horizontal and vertical, of the luminous point on the screen.

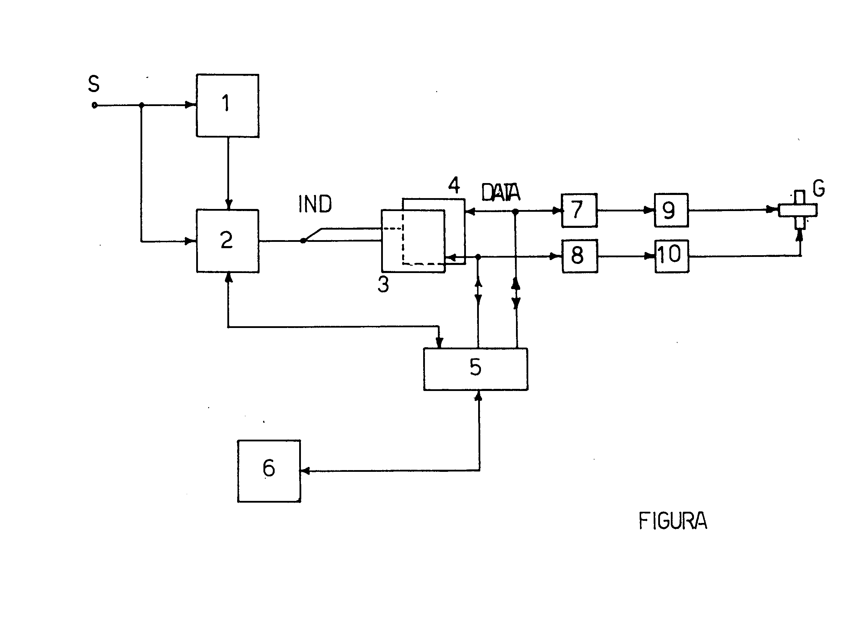

Further aims and advantages of the present invention will become clear from the following detailed description and annexed drawings supplied as a non limiting example, wherein:
The figure represents a block diagram of the generator of convergence signals according to the invention.

In the figure, that represents a block diagram of the generator of convergence signals according to the invention, the reference number 1 indicates a generator of clock signals, as an example working on a frequency of 20 MHz, that receives from the terminal S the syncronism signals; reference number 2 indicates an address generator, also connected to the terminal S and to the generator 1.

For every point of the screen, i.e. for each instant of the frame interval, a pair of current values is needed, generally different, be it between themselves or with respect to the previous instant, one for the horizontal deflection and one for the vertical deflection.

The generator 2 sends the addresses to the relative entrances (IND9 of two memories, of the reading and writing type, one of which (3) contains the values of the convergence currents Ix for one of the coils and the other (4) the values of the convergence currents Iy for the another coil.

The values stored in each of the two memories form a matrix, representative of the position, horizontal and vertical , of the electronic beam on the screen.

The generator 2 suitably supplies the addresses in syncronism with the movement of the beam, starting from the syncronism signals S. Each of the two memories sends the data available at its exit terminals (DATA) to a convertor D/A (7,8) followed by an amplyfier (9,10) that in turn drives the respective convergence coil of the relevant yoke.

So as to perform the adjustment a microprocessor elaborator (6) is provided, coupled to the circuit through an appropriate interface (5), described further on, connected both to the terminals of exit data (DATA) memories (3,4) and to the address generator 2.

This adjustment is carried out in real time by an operator only on the more critical points of the screen; a cubic interpolation algorithm allows for the easy calculation of the values in all the other intermediate points.

The two memories (3,4), the convertors D/A (7,8) and the amplyfiers (9,10) are associated to a single convergence yoke G,relative to the scanning of one of the three primary colours, therefore in a projector with three picture tubes, the blocks (3,4,7,8,9,10)are in numbers of three; whereas the blocks (1), (2), (5) are common.

The interface (5) between the elaborator (6) and the circuits (2,3,4) provide, under the control of the elaborator (6) to transmit the necessary data to the address generator (2) and simultaneously to transmit to the memories (3,4) the pairs of values to be written in memory; the system can also be utilized, should it be the case, for reading the values written in the memories.

The characteristics of the device described become clear from the description and annexed drawings.

From the executed description the advantages of the device object of the present invention also become clear.

In particular they are represented by the fact that:

its possible to easily define the correction values for many point of the television screen;

the adjustment procedure becomes very simplified;

the functioning is independent from the values of frequency.

It is clear that numerous variants are possible by the man skilled in the art, to the device described as an example, without however departing from the novelty principles inherent to the invention.

## Claims

1.  A generating device of convergence signals for colour display, in particular for a video projector, obtained by superimposing different colour images, characterised by the fact that the generator comprises a digital memory (3,4) for conserving in a matrix form the values of the corrective convergence signals in function of the position, horizontal and vertical, of the luminous point on the screen.

2.  A generating device of convergence signals for colour display, according to claim 1, characterised by the fact that the generator also comprises an address generator (2) to scan said digital memory (3,4) and a digital analogic convertor (7,8) for converting in an analogic form the values contained in the memory and send them to the convergence correction system.

3.  A generating device of convergence signals for colour display, according to claim 1 or 2, characterised by the fact that it also comprises an interface (5) for interfacing said memory (3,4) and/or said address generator (2) with an elaborator (6),so as to be able to control in real time the convergence corrections carried out.

4.  A generating device of convergence signals for colour display, according to claim 3, characterised by the fact that said interface (5) is apt to provide, under the control of the elaborator (6) to the transmission of the data necessary to the address generator (2) and simultaneously to the transmission to the memory (3,4) of the couple of values to write in said memory.

5.  A generating device of convergence signals for colour display, according to claim 2, characterised by the fact that for every image of a different colour a digital memory (3,4), a digital/analogico convertor (7,8) and a convergence correction system (G) are provided.

6.  A generating device of convergence signals for colour display, according to claim 3, characterised by the fact that said elaborator (6) is able to, utilizing an interpolation algorithm, calculate the values of all the intermediate points.

7.  A generating device of convergence signals for colour display, according to claim 6, characterised by the fact that said algorithm is a cubic interpolation algorithm.

8.  A generating device of convergence signals for colour display, according to claim 1, characterised by the fact that said digital memory (3,4) is composed of two groups of cells, one (3) being apt to contain the relative data of the values of the corrective signals for the horizontal convergence and the other (4) being able to contain the relative data of the values of the corrective signals for the vertical convergence.

FIGURA

European
Patent Office

EUROPEAN SEARCH
REPORT

Application Number

EP 91 11 1066

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 326 152   (HITACHI LTD) <br> * Page 3, line 55 - page 4, line 15; page 5, line 39 - page 6, line 3 * | 1,2,5 | H 04 N 9/28 |
| A | | 3,4,6-8 | |
| | − − − | | |
| X | EP-A-0 194 944   (SOCIETE ELECTRONIQUE DE LA REGION PAYS DE LA LOIRE) <br> * Column 1, lines 10-13; column 5, lines 33-60; column 8, lines 1-6,47-58 * | 1,2 | |
| A | | 3-8 | |
| | − − − | | |
| A | US-A-4 935 674   (RODRIQUEZ-CAVAZOS) <br> * Column 2, lines 49-68; column 4, line 33 - column 5, line 38 * | 1-8 | |
| | − − − | | |
| A | US-A-4 871 948   (NELSON) <br> * Column 4, line 28 - column 5, line 48 * | 1-8 | |
| | − − − − − | | |

TECHNICAL FIELDS
SEARCHED (Int. Cl.5)

H 04 N

The present search report has been drawn up for all claims

| Place of search | Date of completion of search | Examiner |
|---|---|---|
| The Hague | 25 September 91 | PIGNIEZ T.J.P. |